# EUROPÄISCHE PATENTSCHRIFT

(11) **EP 1 990 553 B1**
(45) Veröffentlichungstag und Bekanntmachung des Hinweises auf die Patenterteilung: **15.09.2010**
(21) Anmeldenummer: 07107649.1
(22) Anmeldetag: 07.05.2007
(51) Int. Cl.: F16B 35/04, F16B 5/02

(54) **Beschlagschraube, insbesondere für Möbel-Beschläge**
Fitting screw, in particular for furniture fittings
Vis pour garnitures, en particulier pour garnitures de meubles

(43) Veröffentlichungstag der Anmeldung: 12.11.2008
(73) Patentinhaber: SPAX International GmbH & Co. KG, 58256 Ennepetal (DE)
(72) Erfinder: Langewiesche, Frank, 45549 Sprockhövel (DE)
(74) Vertreter: Patentanwälte Dr. Solf & Zapf

(56) Entgegenhaltungen:
- EP-A1- 0 467 070
- WO-A-96/22472
- DE-A1- 19 644 507
- DE-U1- 29 502 068
- DE-U1- 29 605 586
- DE-U1-202004 002 877
- GB-A- 2 375 954
- US-A1- 2004 175 254

## Beschreibung

Die vorliegende Erfindung betrifft eine Beschlagschraube zum Befestigen von Beschlägen an Bauteilen insbesondere aus Holz oder dergleichen holzähnlichen Werkstoffen oder auch Kunststoffen, bestehend aus einem Kopf und einem durch ein Beschlag-Montageloch hindurch in ein vorgebohrtes Bauteilloch einschraubbaren Schraubenschaft mit einem zylindrischen Kern und einem als radiale Erhebung schraubenlinienförmig über den Kern verlaufenden Gewinde, wobei der Kopf einen in das Beschlag-Montageloch einzuführenden Bund aufweist. Eine solche Beschlagschraube ist aus der DE 296 05 586 U1 bekannt..

Ferner betrifft die Erfindung auch eine Bauteil-Beschlaganordnung, wie Möbelbeschlag, Schubfachbeschlag, Scharnierbeschlaganordnung oder dergleichen, mit mindestens einem Montageloch zum Durchführen einer Beschlagschraube.

Andere Beschlagschrauben sind auch unter dem Begriff "Euroschrauben" bekannt. In einer heute sehr verbreiteten Ausführung ist diese Schraube als Senkkopfschraube mit einem flachen Senkkopf ausgebildet, der unmittelbar in den Schraubenschaft übergeht. Der Schraubenschaft weist über seine gesamte Länge, also vom Senkkopf bis zum freien Ende, einen zylindrischen Kern auf. Für die gebräuchlichste Ausführung von Beschlägen, deren Montagelöcher einen Durchmesser von 6,4 mm mit einer üblichen Toleranz von -0,1 mm aufweisen, weisen die bekannten Schrauben einen Kerndurchmesser von 4,3 mm auf, wobei in dem jeweiligen Bauteil für jede Schraube ein Loch mit einem Durchmesser von 5 mm vorzubohren ist. Das Gewinde ist üblicherweise mit einem äußeren Gewindedurchmesser von circa 6,1 bis 6,2 mm und mit einer Steigung von 2,3 mm so ausgeführt, dass beim Einschrauben in dem Bauteilloch selbsttätig ein Gewinde geformt wird.

Nun hat sich in der Praxis bei Beschlag-Befestigungen mit den bekannten Schrauben immer wieder gezeigt, dass es nach einiger Zeit zu einem Lösen der Schrauben und zu Absenkerscheinungen zwischen dem jeweiligen Bauteil, wie zum Beispiel einem Schubfach, und dem Beschlag, z.B. einer Schiebeführung, kommt. Ein erneutes Festziehen der Schrauben ist umständlich und auch nur eingeschränkt und insbesondere nicht beliebig oft möglich, weil dann häufig durch ein zu hohes Anzugsmoment die Schraube in dem jeweiligen Bauteilloch durchgedreht wird, so dass dann das Gewinde nicht mehr greift.

Der Erfindung liegt die Aufgabe zu Grunde, eine Beschlagschraube der beschriebenen Art mit verbesserten Gebrauchseigenschaften zu schaffen, die eine dauerhafte und sichere Beschlag-Befestigung gewährleistet.

Erfindungsgemäß wird dies durch die Merkmale des unabhängigen Anspruchs 1 erreicht. Ferner ist eine aneinander angepasste Kombination mindestens einer erfindungsgemäßen Beschlagschraube mit einem Bauteil-Beschlag Gegenstand des Anspruchs 14. Vorteilhafte Ausgestaltungen der Erfindung sind Gegenstand der abhängigen Ansprüche.

Erfindungsgemäß ist demnach zunächst vorgesehen, dass der Bund durch seine radialsymmetrisch verteilte und axial verlaufenden Rippen in dem Beschlag-Montageloch einen Reibschluss erzeugt. Durch diesen Reibschluss (Kraftschluss) wird im Grunde eine Passung des Bundes in dem Beschlag-Montageloch und hierdurch eine Vermeidung oder Kompensierung von eventuellen Toleranzabweichungen erreicht, wodurch dauerhaft - und zwar sogar auch im eventuellen Falle eines geringfügigen Lösens der Schraube - ein relatives Absenken zwischen dem jeweiligen Beschlag und dem Bauteil wirksam vermieden wird. Außerdem bewirkt der erfindungsgemäße Reibschluss vorteilhafterweise auch eine Erhöhung des Lösemomentes, so dass es in den meisten Fällen erst gar nicht zu einem Lösen der Schraube kommt.

In einer vorteilhaften Ausgestaltung der Erfindung weist der Kopf in seinem an den Bund angrenzenden Bereich eine insbesondere radiale, zur Schraubenachse senkrechte Auflagefläche zur Anlage an einem das Montageloch umgebenden Bereich des Beschlages auf. Somit ist der Kopf bevorzugt als kurzer Flachkopf ausgebildet, es kann sich aber auch um einen Senkkopf mit einer konischen Auflagefläche handeln. In jedem Fall weist die Auflagefläche eine Profilierung zur Erhöhung eines Schrauben-Überdrehmomentes auf. Die Profilierung kann mit Vorteil durch eine Mehrzahl von rippenartigen, radial verlaufenden, von der Auflagefläche vorspringenden Zähnen gebildet sein. Durch diese vorteilhafte Maßnahme wird ein Durchdrehen der Schraube auch bei höherem Anzugsmoment effektiv vermieden, indem beim Anziehen zwischen der profilierten Auflagefläche der Schraube und dem Beschlag ein zunehmender Kraft- und/oder Formschluss bewirkt wird.

Weiterhin ist es im Hinblick auf die zu lösende Aufgabe vorteilhaft, wenn der Kern des Schraubenschaftes einen Kerndurchmesser aufweist, der größer/gleich dem Bohrungsdurchmesser des vorgebohrten Bauteilloches ist. Im Falle eines Bohrungsdurchmessers von 5 mm ist der Kerndurchmesser vorzugsweise mit einem Übermaß bis zu 0,2 mm ausgebildet. Der Kerndurchmesser beträgt somit 5 mm mit einer Toleranz von +/ -0,1 mm und kann auch bis zu 5,2 mm betragen. Auch diese bevorzugte Maßnahme trägt zu einem festen Sitz der Schraube zur Vermeidung von Löseerscheinungen bei.

Anhand eines bevorzugten, in der beiliegenden Zeichnung veranschaulichten Ausführungsbeispiels soll im Folgenden die Erfindung genauer erläutert werden. Dabei zeigen:
- Fig. 1: eine stark vergrößerte Seitenansicht einer erfindungsgemäßen Beschlagschraube,
- Fig. 2: eine Stirnansicht der Beschlagschraube auf das freie Ende des Gewindeschaftes in Pfeilrichtung II gemäß Fig. 1,
- Fig. 3: eine Stirnansicht auf die Seite des Kopfes in Pfeilrichtung III gemäß Fig. 1 und
- Fig. 4: die gleiche Ansicht wie in Fig. 1 mit eingetragenen Bemessungsgrößen.

In den verschiedenen Figuren der Zeichnung sind gleiche Teile stets mit den gleichen Bezugszeichen versehen. Jede eventuell nur einmal unter Bezugnahme auf nur eine oder einen Teil der Zeichnungsfiguren vorkommende Beschreibung eines Teils gilt daher analog auch bezüglich der anderen Zeichnungsfiguren, in denen dieses Teil mit dem entsprechenden Bezugzeichen ebenfalls zu erkennen ist.

Eine erfindungsgemäße Beschlagschraube 1 dient zum Befestigen eines nicht dargestellten, insbesondere aus Metall oder aber aus Kunststoff bestehenden Beschlages an einem ebenfalls nicht dargestellten Bauteil insbesondere aus Holz oder einem anderen holzähnlichen Werkstoff (z.B. Spanplatten, mitteldichte Faserplatten, OSB-Platten oder dergleichen) oder auch aus einem Kunststoff. Die Beschlagschraube 1 besteht aus einem Kopf 2 und einem Schraubenschaft 4, der durch ein Beschlag-Montageloch hindurch in ein bevorzugt vorgebohrtes Bauteilloch einschraubbar ist. Der Schraubenschaft 4 besteht aus einem zylindrischen Kern 6 und einem als radiale Erhebung schraubenlinienförmig über den Kern 6 verlaufenden Gewinde 8, welches als selbst-gewindeformendes Holzgewinde ausgeführt ist.

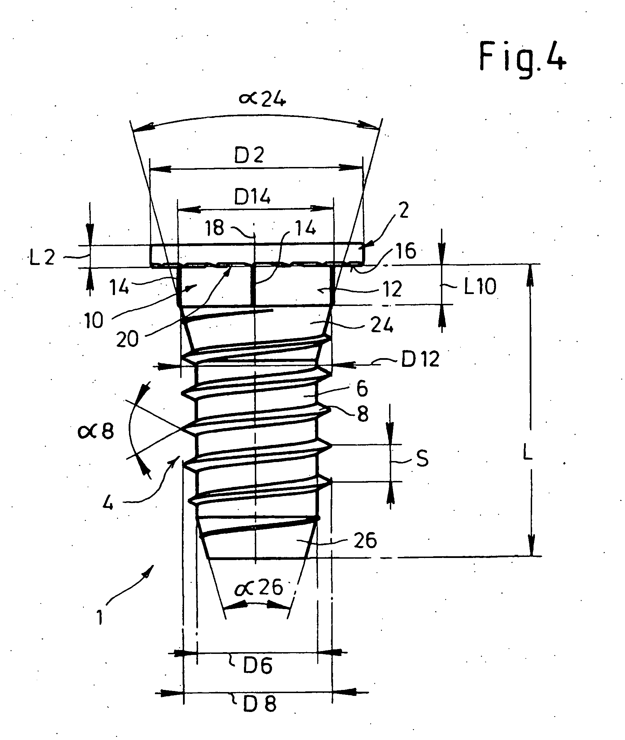

Erfindungsgemäß weist der Kopf 2 auf seiner dem Schraubenschaft 4 zugewandten Seite einen in das Beschlag-Montageloch einzuführenden Bund 10 auf. Dieser Bund 10 ist in Anpassung an das jeweilige Montageloch derart ausgebildet, dass er in dem Montageloch einen Reibschluss (Kraftschluss) erzeugt. Erfindungsgemäß ist der Bund 10 zylindrisch ausgebildet, wobei er auf seiner Umfangsfläche 12 mehrere über den Umfang insbesondere radialsymmetrisch verteilte und axial verlaufende Rippen 14 aufweist. Bei der dargestellten Ausführungsform weist der Bund 10 vier Rippen 14 auf. Erfindungsgemäß weist die Umfangsfläche 12 einen Durchmesser D12 (siehe Fig. 4) auf, der kleiner/gleich dem Durchmesser des Beschlag-Montagelochs ist. Dabei liegen aber die Rippen 14 mit ihren äußeren Rippenkanten auf einem Umfang mit einem Durchmesser D14, der geringfügig größer als der Durchmesser des Beschlag-Montagelochs ist. Hierdurch wird ein Toleranzausgleich erreicht, um in jedem Fall den erfindungsgemäßen Reibschluss zu gewährleisten. Bei einer Auslegung für ein Beschlag-Montageloch mit einem Durchmesser von 6,4 mm mit einer Toleranz von -0,1 mm beträgt der Durchmesser D12 der Umfangsfläche 12 des Bundes 10 bevorzugt 6,3 mm mit einer Toleranz von +/-0,05 mm, wobei der von den Rippen 14 definierte Umfangsdurchmesser D14 insbesondere 6,5 mm mit einer Toleranz von +/-0,05 mm beträgt.

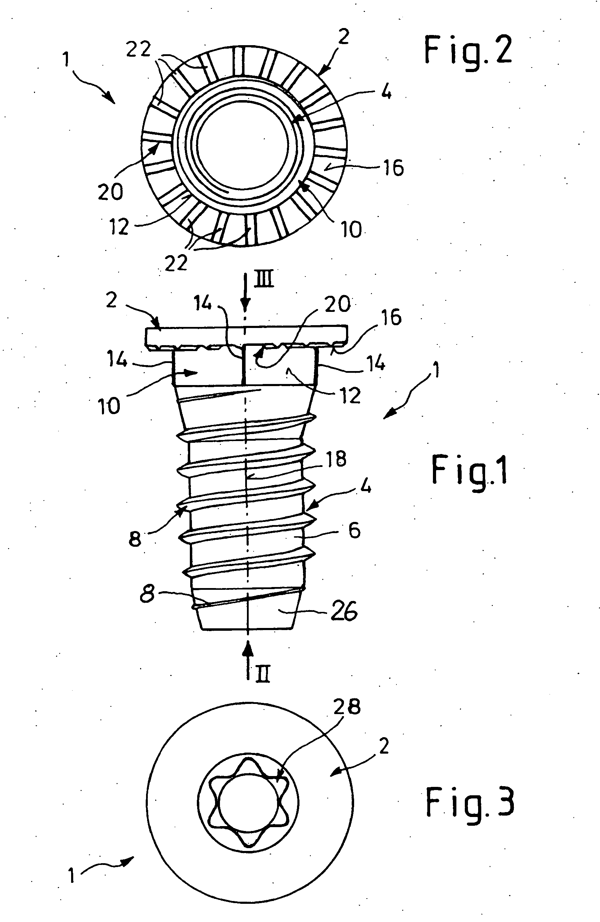

In weiterer bevorzugter Ausgestaltung der Erfindung weist der Kopf 2 in seinem an den Bund 10 angrenzenden Bereich eine Auflagefläche 16 zur Anlage an einem das Montageloch umgebenden Bereich des Beschlages auf. Bei der bevorzugten Ausgestaltung liegt die Auflagefläche 16 in einer zur Schraubenachse 18 senkrechten Ebene. Die Auflagefläche 16 weist eine Profilierung 20 zur Erhöhung eines Schrauben-Überdrehmomentes auf. Bei der dargestellten, bevorzugten Ausführung ist die Profilierung 20 durch eine Mehrzahl von rippenartigen, radial verlaufenden Zähnen 22 gebildet (siehe insbesondere Fig. 2). Beispielsweise können insgesamt achtzehn Zähne 22 in einer radialsymmetrischen Umfangsverteilung und mit einer Zahnhöhe von 0,15 mm +/-0,05 mm vorgesehen sein.

Es ist weiterhin vorteilhaft, wenn der Kern 6 des Schraubenschaftes 4 einen Kerndurchmesser D6 aufweist, der größer/gleich dem Bohrungsdurchmesser des jeweiligen Bauteilloches ist. Bei einem Bohrungsdurchmesser von 5 mm beträgt der Kerndurchmesser D6 5 mm (+/-0,1 mm) mit einem Übermaß bis zu 0,2 mm, das heißt insgesamt bis zu 5,2 mm.

Weiterhin weist das Gewinde 8 bei einer Auslegung der Beschlagschraube 1 für 6,4mm-Beschlag-Montagelöcher einen Gewinde-Außendurchmesser D8 von 6,2 mm +/-0,1 mm auf. Dabei ist das Gewinde 8 im Schnitt V-förmig mit zwei in einer äußeren Gewindekante zusammenlaufenden Flanken ausgebildet, wobei die Flanken bevorzugt einen Flankenwinkel α8 von 55° einschließen (siehe Fig. 4).

Wie sich weiterhin aus Fig. 1 und 4 ergibt, ist axial zwischen dem Bund 10 und dem Schraubenschaft 4 ein insbesondere konischer Übergangsabschnitt 24 mit einem Konuswinkel α24 von beispielsweise 30° angeordnet. Das Gewinde 8 verläuft von dem Schraubenschaft 4 bis auf den Übergangsabschnitt 24 und läuft dort radial aus.

In weiterer bevorzugter Ausgestaltung weist der Schraubenschaft 4 an seinem freien, dem Kopf 2 gegenüberliegenden Ende einen im Durchmesser reduzierten, konischen oder zylindrischen Einführzapfen 26 auf. Bei der dargestellten Ausführung weist der konische Einführzapfen 26 einen Konuswinkel α26 von zum Beispiel 30° auf. Das Gewinde 8 läuft vom Schraubenschaft 4 auch bis auf den Einführzapfen 26 mit dort radial abnehmender und auslaufender Höhe. Der Einführzapfen 26 erleichtert das Einschrauben der Schraube 1 in das vorgebohrte Bauteilloch.

Es ist weiterhin vorteilhaft, wenn das Gewinde 8 eine gegenüber der bekannten Schraubenausführung reduzierte Steigung S von insbesondere 1,6 mm aufweist. Auch dies trägt zu einem festen Sitz der Schraube bei.

Abweichend von der dargestellten Ausführung ist es vorteilhaft, wenn das Gewinde 8 zumindest in einem Teil seiner Verlaufslänge, und zwar insbesondere in seinem vom freien Ende des Gewindeschaftes 4 ausgehenden Bereich, ein Wellenprofil aufweist, wobei die äußere Gewindekante in radialer Richtung wellenförmig zwischen Wellenbergen und Wellentälern verläuft und die Gewindeflanken im Bereich der Wellentäler die Flankenflächen unterbrechende Vertiefungen aufweisen. Diese Ausgestaltung ist an sich z.B. bei Spanplattenschrauben bekannt.

Wie sich noch aus Fig. 3 ergibt, weist der Kopf 2 einen insbesondere als Innenstern ausgebildeten Innenkraftangriff 28 für ein Drehwerkzeug auf.

Der Vollständigkeit halber sei noch bemerkt, dass gemäß Fig. 4 der Kopf 2 eine axiale Dicke beziehungsweise Länge L2 von insbesondere etwa 1 mm aufweist, wobei die Zähne 22 von der Auflagefläche 16 etwa 0,15 mm vorspringen. Der Bund 10 weist eine axiale Länge L10 von etwa 1,75 mm auf. Die Gesamtlänge L der Schraube 1 ausgehend von der Auflagefläche 16 des Kopfs 2 bis zum freien Ende des Einführzapfens 26 kann etwa 13 mm betragen.

Die erfindungsgemäße Beschlagschraube 1 eignet sich außer für die bevorzugte Verwendung in der Möbelindustrie grundsätzlich auch für beliebige andere Anwendungen, wobei ein erstes, ein Montageloch aufweisendes Bauteil an einem zweiten Bauteil befestigt werden soll.

## Patentansprüche

1. Beschlagschraube (1) zum Befestigen von Beschlägen an Bauteilen insbesondere aus Holz oder dergleichen holzähnlichen Werkstoffen, bestehend aus einem Kopf (2) und einem durch ein Beschlag-Montageloch hindurch in ein vorgebohrtes Bauteilloch einschraubbaren Schraubenschaft (4) mit einem zylindrischen Kern (6) und einem als radiale Erhebung schraubenlinienförmig über den Kern (6) verlaufenden Gewinde (8), wobei der Kopf (2) einen in das Beschlag-Montageloch einzuführenden Bund (10) aufweist,
**dadurch gekennzeichnet, dass** der Bund (10) in Anpassung an das Montageloch derart ausgebildet ist, dass er in dem Beschlag-Montagelach einen Reibschluss erzeugt, wobei der zylindrisch ausgebildete Bund (10) eine Umfangsfläche (12) mit einem Durchmesser (D12) aufweist, der kleiner/gleich dem Durchmesser des Beschlag-Montageloches ist, und wobei der Bund (10) auf seiner Umfangsfläche (12) mehrere über den Umfang radialsymmetrisch verteilte und axial verlaufende Rippen (14) aufweist, die mit ihren äußeren Rippenkanten auf einem Umfang mit einem Durchmesser (D14) liegen, der größer als der Durchmesser des Beschlag-Montageloches ist.

2. Beschlagschraube nach Anspruch 1,
**dadurch gekennzeichnet, dass** bei einer Auslegung für ein Beschlag-Montageloch mit einem Durchmesser von 6,4 mm, insbesondere mit einer Toleranz von -0,1 mm, die Umfangsfläche (12) des Bundes (10) einen Durchmesser (D12) von 6,3 mm vorzugsweise mit einer Toleranz von +/-0,05 mm aufweist, wobei die Rippen (14) mit ihren äußeren Rippenkanten auf einem Umfang mit einem Durchmesser (D14) von 6,5 mm insbesondere mit einer Toleranz von +/-0,05 mm liegen.

3. Beschlagschraube nach Anspruch 1 oder 2,
**dadurch gekennzeichnet, dass** der Kopf (2) in seinem an den Bund (10) angrenzenden Bereich eine Auflagefläche (16) zur Anlage an einem das Montageloch umgebenden Bereich des Beschlages aufweist, wobei die Auflagefläche (16) eine Profilierung (20) zur Erhöhung eines Schrauben-Überdrehmomentes aufweist.

4. Beschlagschraube nach Anspruch 3,
**dadurch gekennzeichnet, dass** die Profilierung (20) durch eine Mehrzahl von rippenartigen, radial verlaufenden Zähnen (22) gebildet ist.

5. Beschlagschraube nach Anspruch 3 oder 4,
**dadurch gekennzeichnet, dass** die Auflagefläche (16) in einer zur Schraubenachse (18) senkrechten Ebene liegt oder konisch ausgebildet ist.

6. Beschlagschraube nach einem der Ansprüche 1 bis 5,
**dadurch gekennzeichnet, dass** der Kern (6) des Schraubenschaftes (4) einen Kerndurchmesser (D6) aufweist, der im Gebrauch größer/gleich dem Bohrungsdurchmesser des Bauteilleches ist.

7. Beschlagschraube nach einem der Ansprüche 1 bis 6,
**dadurch gekennzeichnet, dass** das Gewinde (8) einen Gewinde-Außendurchmesser (D8) von 6,2 mm aufweist.

8. Beschlagschraube nach einem der Ansprüche 1 bis 7,
**dadurch gekennzeichnet, dass** das Gewinde (8) im Schnitt V-förmig mit zwei in einer äußeren Gewindekante zusammenlaufenden Flanken ausgebildet ist, wobei die Flanken bevorzugt einen Flankenwinkel (α8) von 55° einschließen.

9. Beschlagschraube nach einem der Ansprüche 1 bis 8
**dadurch gekennzeichnet, dass** axial zwischen dem Bund (10) und dem Schraubenschaft (4) ein insbesondere konischer Übergangsabschnitt (24) angeordnet ist.

10. Beschlagschraube nach einem der Ansprüche 1 bis 9,
**dadurch gekennzeichnet, dass** der Schraubenschaft (4) an seinem freien, dem Kopf (2) gegenüberliegenden Ende einen im Durchmesser reduzierten, konischen oder zylindrischen Einführzapfen (26) aufweist.

11. Beschlagschraube nach einem der Ansprüche 1 bis 10,
**dadurch gekennzeichnet, dass** das Gewinde (8) eine Steigung (S) von insbesondere 1,6 mm aufweist.

12. Beschlagschraube nach einem der Ansprüche 1 bis 11,
**dadurch gekennzeichnet, dass** das Gewinde (8) zumindest in einem Teil seiner Verlaufslänge, insbesondere in seinem vom freien Ende des Gewindeschaftes (4) ausgehenden Bereich, ein Wellenprofil aufweist, wobei eine äußere Gewindekante in radialer Richtung wellenförmig zwischen Wellenbergen und Wellentälern verläuft und die Gewindeflanken im Bereich der Wellentäler die Flankenflächen unterbrechende Vertiefungen aufweisen.

13. Beschlagschraube nach einem der Ansprüche 1 bis 12,
**dadurch gekennzeichnet, dass** der Kopf (2) einen insbesondere als Innenstern ausgebildeten Innenkraftangriff (28) für ein Drehwerkzeug aufweist.

14. Bauteil-Beschlaganordnung, wie Möbelbeschlag, Schubfachbeschlag, Scharnierbeschlaganordnung oder dergleichen, mit mindestens einem Montageloch,
**gekennzeichnet durch** mindestens eine Beschlagschraube (1) nach einem der Ansprüche 1 bis 13, wobei die Beschlagschraube (1) im Bereich ihres Kopf-Bundes (10) und das Montageloch derart aneinander angepasst sind, dass beim Verschrauben ein Reibschluss zwischen dem Bund (10) und dem Montageloch entsteht.

## Claims

1. A fitting screw (1) for fastening fittings to components in particular made from wood or the like materials similar to wood, consisting of a head (2) and a screw shank (4), which can be screwed through a fitting mounting hole into a pre-bored component hole, with a cylindrical core (6) and a thread (8) extending as a radial raised element in the form of a helix over the core (6), the head (2) having a collar (10) to be introduced into the fitting mounting hole,
**characterised in that** the collar (10), in adaptation to the mounting hole, is designed such that it produces a friction lock in the fitting mounting hole, the cylindrically formed collar (10) having a peripheral surface (12) with a diameter (D12) which is smaller than/equal to the diameter of the fitting mounting hole, and the collar (10) having on its peripheral surface (12) a plurality of ribs (14) which are distributed radially symmetrically over the periphery and extend axially, which ribs lie with their outer rib edges on a periphery with a diameter (D14) which is greater than the diameter of the fitting mounting hole,

2. A fitting screw according to Claim 1, **characterised in that** in a design for a fitting mounting hole with a diameter of 6.4 mm, in particular with a tolerance of -0.1 mm, the peripheral surface (12) of the collar (10) has a diameter (D12) of 6.3 mm preferably with a tolerance of +/- 0.05 mm, the ribs (14) with their outer rib edges lying on a periphery with a diameter (D14) of 6.5 mm in particular with a tolerance of +/-0.05 mm.

3. A fitting screw according to Claim 1 or 2, **characterised in that** the head (2), in its region adjoining the collar (10), has a contact surface (16) for lying against a region of the fitting surrounding the mounting hole, the contact surface (16) having profiling (20) for increasing a screw overtorque.

4. A fitting screw according to Claim 3, **characterised in that** the profiling (20) is formed by a plurality of rib-like, radially extending teeth (22).

5. A fitting screw according to Claim 3 or 4, **characterised in that** the contact surface (16) lies in a plane at right-angles to the screw axis (18) or is formed conically.

6. A fitting screw according to one of Claims 1 to 5, **characterised in that** the core (6) of the screw shank (4) has a core diameter (D6) which in use is greater than/equal to the bore diameter of the component hole.

7. A fitting screw according to one of Claims 1 to 6, **characterised in that** the thread (8) has an external thread diameter (D8) of 6.2 mm.

8. A fitting screw according to one of Claims 1 to 7, **characterised in that** the thread (8) is V-shaped in section with two flanks which converge in an outer thread edge, the flanks preferably enclosing a flank angle (α8) of 55°.

9. A fitting screw according to one of Claims 1 to 8, **characterised in that** an in particular conical transition section (24) is arranged axially between the collar (10) and the screw shank (4).

10. A fitting screw according to one of Claims 1 to 9, **characterised in that** the screw shank (4) at its free end located opposite the head (2) has a conical or cylindrical pilot point (26) of reduced diameter.

11. A fitting screw according to one of Claims 1 to 10, **characterised in that** the thread (8) has a pitch (S) of in particular 1.6 mm.

12. A fitting screw according to one of Claims 1 to 11, **characterised in that** the thread (8) at least in a portion of its length, in particular in its region starting from the free end of the threaded shank (4), has a wave profile, an outer thread edge extending in wave-like manner in the radial direction between wave crests and wave troughs and the thread flanks in the region of the wave troughs having recesses which interrupt the flank surfaces.

13. A fitting screw according to one of Claims 1 to 12, **characterised in that** the head (2) has an internal force application point (28), formed in particular as an internal star, for a turning tool.

14. A component/fitting arrangement, such as furniture fitting, drawer fitting, hinge fitting arrangement or the like, with at least one mounting hole, **characterised by** at least one fitting screw (1) according to one of Claims 1 to 13, the fitting screw (1) in the region of its head collar (10) and the mounting hole being adapted to each other such that a friction lock between the collar (10) and the mounting hole is produced upon screwing.

## Revendications

1. Vis pour garniture (1) pour la fixation de garnitures sur des éléments de construction en particulier en bois ou dans les mêmes matériaux identiques au bois, comprenant une tête (2) et une tige de vis (4) pouvant être vissée à travers un trou de montage de garniture dans un trou d'élément de construction pré-percé avec un noyau (6) cylindrique et un filetage (8) agencé sous forme d'éminence radiale en forme de ligne hélicoïdale sur le noyau (6), la tête (2) présentant une collerette (10) à introduire dans le trou de montage de garniture,
**caractérisée en ce que** la collerette (10) est conçue en adaptation au trou de montage de telle sorte qu'elle génère une adhérence par frottement dans le trou de montage de garniture, la collerette (10) conçue cylindrique présentant une surface périphérique (12) avec un diamètre (D12) qui est inférieur/égal au diamètre du trou de montage de garniture, et la collerette (10) présentant sur sa surface périphérique (12) plusieurs nervures (14) réparties avec une symétrie radiale sur le pourtour et agencées axialement, qui sont situées avec leurs arêtes de nervures extérieures sur un pourtour présentant un diamètre (D14) qui est supérieur au diamètre du trou de montage de garniture.

2. Vis pour garniture selon la revendication 1,
**caractérisée en ce que**, dans le cas d'une conception pour un trou de montage de garniture avec un diamètre de 6,4 mm, en particulier avec une tolérance de - 0,1 mm, la surface périphérique (12) de la collerette (10) présente un diamètre (D12) de 6,3 mm, de préférence avec une tolérance de +/-0,05 mm, les nervures (14) se situant avec leurs arêtes de nervures extérieures sur un pourtour présentant un diamètre (D14) de 6,5 mm en particulier avec une tolérance de +/-0,05 mm.

3. Vis pour garniture selon la revendication 1 ou 2,
**caractérisée en ce que** la tête (2) présente dans sa zone contiguë à la collerette (10) une surface d'appui (16) pour l'application sur une zone, entourant le trou de montage, de la garniture, la surface d'appui (16) présentant un profilage (20) pour l'augmentation d'un couple de foirage de vis.

4. Vis pour garniture selon la revendication 3,
**caractérisée en ce que** le profilage (20) est formé par une pluralité de dents (22) de type nervure, agencées radialement.

5. Vis pour garniture selon la revendication 3 ou 4,
**caractérisée en ce que** la surface d'appui (16) est disposée dans un plan perpendiculaire à l'axe de vis (18) ou est conçue conique.

6. Vis pour garniture selon l'une quelconque des revendications 1 à 5,
**caractérisée en ce que** le noyau (6) de la tige de vis (4) présente un diamètre de noyau (D6) qui est supérieur/identique au diamètre de perçage du trou de l'élément de construction.

7. Vis pour garniture selon l'une quelconque des revendications 1 à 6,
**caractérisée en ce que** le filetage (8) présente un diamètre extérieur de filetage (D8) de 6,2 mm.

8. Vis pour garniture selon l'une quelconque des revendications 1 à 7,
**caractérisée en ce que** le filetage (8) est conçu en coupe en forme de V avec deux flancs convergents dans une arête de filetage extérieure, les flancs formant de préférence un angle de flanc (α8) de 55°.

9. Vis pour garniture selon l'une quelconque des revendications 1 à 8,
**caractérisée en ce qu'**une partie de transition (24), en particulier conique, est disposée axialement entre la collerette (10) et la tige de vis (4).

10. Vis pour garniture selon l'une quelconque des revendications 1 à 9,
**caractérisée en ce que** la tige de vis (4) présente sur son extrémité libre, opposée à la tête (2), un tenon d'introduction (26) réduit en diamètre, conique ou cylindrique.

11. Vis pour garniture selon l'une quelconque des revendications 1 à 10,
**caractérisée en ce que** le filetage (8) présente un pas (S) en particulier de 1,6 mm.

12. Vis pour garniture selon l'une quelconque des revendications 1 à 11,
**caractérisée en ce que** le filetage (8) présente un profil ondulé au moins dans une partie de sa longueur de tracé, en particulier dans sa zone partant de l'extrémité libre de la tige filetée (4), une arête de filetage extérieur s'étendant dans le sens radial avec une forme ondulée entre des sommets et des creux d'ondulation et les flancs de filetage présentant des cavités interrompant les surfaces de flancs dans la zone des creux d'ondulation.

13. Vis pour garniture selon l'une quelconque des revendications 1 à 12,
**caractérisée en ce que** la tête (2) présente une application de force intérieure (28) conçue en particulier comme une étoile intérieure pour un outil de tournage.

14. Agencement de garniture pour des éléments de construction tels que des garniture de meuble, garniture de tiroir, agencement de garniture de charnière ou similaire, comprenant au moins un trou de montage,
**caractérisé par** au moins une vis pour garniture (1) selon l'une quelconque des revendications 1 à 13, la vis de garniture (1) dans la zone de sa collerette de sommet (10) et le trou de montage étant adaptés l'un à l'autre de telle sorte qu'une adhérence par frottement se produit lors du vissage entre la collerette (10) et le trou de montage.
